# EUROPEAN PATENT SPECIFICATION

(11) **EP 2 285 501 B1**
(45) Date of publication and mention of the grant of the patent: **31.10.2012**
(21) Application number: 08758405.8
(22) Date of filing: 07.05.2008
(51) Int. Cl.: B05D 5/06, B32B 33/00, H01F 1/00

(54) **MAGNETIC PIGMENT COATINGS, LAMINATES AND METHOD OF PRODUCTION THEREOF**
BESCHICHTUNGEN AUS MAGNETISCHEN PIGMENTEN, LAMINATE UND HERSTELLUNGSVERFAHREN DAFÜR
REVÊTEMENTS DE PIGMENTS MAGNÉTIQUES, STRATIFIÉS ET PROCÉDÉ DE PRODUCTION ASSOCIÉ

(43) Date of publication of application: 23.02.2011
(73) Proprietor: Actega Rhenania Gmbh, 41516 Grevenbroich (DE)
(72) Inventor: LUCAS, Michael, 41352 Korschenbroich (DE); MELONI, Andre, 41542 Dormagen (DE)
(74) Representative: Maiwald, Walter
(86) International application number: PCT/EP2008/003676
(87) International publication number: WO 2009/135506

(56) References cited:
- EP-A- 0 406 667
- EP-A- 0 428 933
- EP-A- 1 493 590
- EP-A- 1 734 068
- WO-A-94/14175
- DE-U1-202004 016 881
- US-A- 4 511 616
- US-A- 4 801 392
- US-A1- 2002 134 282
- US-A1- 2005 123 764
- US-A1- 2007 251 603
- US-A1- 2007 254 106
- US-A1- 2008 070 003
- DATABASE WPI Week 200527 Thomson Scientific, London, GB; AN 2005-257660 XP002534282 -& JP 2005 088967 A (TOYO SEIKAN KAISHA LTD) 7 April 2005 (2005-04-07)
- DATABASE WPI Week 200520 Thomson Scientific, London, GB; AN 2005-185871 XP002534283 & JP 2005 032784 A (TDK CORP) 3 February 2005 (2005-02-03)
- DATABASE WPI Week 200265 Thomson Scientific, London, GB; AN 2002-602419 XP002534297 & JP 2002 141219 A (DAINIPPON INK & CHEM INC) 17 May 2002 (2002-05-17)

## Description

The invention concerns a method of manufacturing a material which shows anisotropic properties when interacting with electromagnetic radiation of suitable wavelength or with an electric, magnetic, or electromagnetic field.

The invention further concerns products obtainable or obtained by means of this method, specifically including laminated products.

The invention also concerns uses of the said method for a variety of purposes.

Methods for creating visible effects in surface coatings by orienting magnetic or magnetizable pigment particles in a magnetic field are known.

Thus, the orientation of metallic particles in a magnetic field is e.g. described in US 2 570 856; DE 40 41 467; and DE 101 14 445.

Similar methods, using metal oxides, are e.g. described in DE 20 06 848; DE 36 17 430; DE 43 13 541; DE 43 40 141; and DE 44 19 173.

It is known e.g. from DE 39 38 055 and EP 0 710 508 that ferromagnetic compounds can be used in comparable contexts.

Apparatus suitable for practicing such methods are described in DE 44 38 743; EP 0 641 461; EP 0 406 667; EP 0 556 449; DE 10 2004 035 866; and EP 0 710 508.

In at least some of these references, products obtainable by practicing such methods are described, as are materials suitable for manufacturing such products.

The methods described in the above references are basically limited to the use of magnetic interactions, and require the presence of magnetic or magnetizable pigment particles, or mixtures of pigment particles with magnetic or magnetizable, non-pigment particles.

Against this background, it is an object of the present application to provide alternative methods of manufacturing the initially mentioned materials.

It is another object of the invention to provide a manufacturing method basically using magnetic interaction, to produce laminated materials and similar materials comprising at least two preformed substrates connected by an intermediate layer.

A further object of the invention relates to the provision of products with a top or surface coating, which are provided with the properties that the inventive manufacturing methods may provide them with.

Another important objective of the invention is to provide laminated products which exhibit the characteristics provided by the application of the inventive method.

Further objectives of the invention relate to a variety of products which comprise a material in accordance with the invention.

Yet further objectives relate to the use of the inventive method to provide specific types of anisotropic properties, for a variety of applications.

Further objectives and advantages of the invention will be apparent from the ensuing description of the invention in more detail, including embodiment examples of the invention.

Generally, the objectives of the invention are attained by the subject matters of the independent claims.

More specifically, the inventive methods (as e.g. defined in attached claim 1) fall into two broad categories, which, however, share a common set of features:

Generally, the method of the invention comprises manufacturing a material, which shows anisotropic properties when interacting with electromagnetic radiation of suitable wavelength, or with an electric, magnetic, or electromagnetic field. The said material comprises a component which itself comprises particles. The component, (thus, generally, the particles content of the component) is capable of interacting with the said electromagnetic radiation or electric, magnetic, or electromagnetic field in a way that the anisotropic material properties are affected or caused, or at least a relevant contribution to said anisotropic material properties is provided.

To achieve this, the said particles are spatially movable under the influence of either the already mentioned electromagnetic radiation or electric, magnetic, or electromagnetic field, or they are spatially movable under the influence of a different electromagnetic radiation or electric, magnetic, or electromagnetic field, at least at some point in time in the course of the manufacturing process.

Within the meaning of the instant application, "particles" include all types of independently, spatially movable particles of suitable size generally ranging from nanoparticles to particles of several millimeters in diameter and larger. Particles may be formed from any of the materials disclosed in the above references and/or mentioned in the instant specification, provided that they are capable of interacting with electromagnetic radiation and/or a magnetic, electric, or electromagnetic field, to spatially move them into the desired position, and to cause the anisotropic properties of the finished material.

"Interacting" within the meaning of the present disclosure comprises all types of interaction between a particular material, on the one hand, and electromagnetic radiation and/or electric, magnetic, or electromagnetic fields, on the other hand. Specifically, this includes reflection, absorption, and extinction of said radiation or field, by said particles.

In the course of operating the inventive method, the material (which, in its finished state, shows the anisotropic properties above discussed) or a suitable precursor material (which is later transformed, cured, or otherwise modified to produce the final material), is provided at a viscosity which permits the spatial movement of the particles.

In other words, there is a point in time during the manufacturing process of the anisotropic material when the material, or a suitable precursor material, has a relatively low viscosity, which is low enough so that the particles may be caused to spatially move under the influence of electromagnetic radiation of suitable wavelength, or of an electric, magnetic, or electromagnetic field. In this state of sufficiently low viscosity, the material is then exposed to the said radiation or field, which causes the particles to spatially move and take an orientation or position suitable for creating the anisotropic property as desired.

A component comprising the particles may be applied, e.g. on a substrate, by any known methods such as spraying, rolling, pouring or casting, printing, immersion, roller coating, rotation evaporation, electrostatic powder coating, and any other known method suitable for placing the component. The methods of the references initially discussed are generally suitable and incorporated herein by reference.

The material or precursor material is exposed to this radiation or field at a suitable viscosity, for a suitable duration of time, and at a suitable strength of said radiation or field, so that the spatial movement of the particles is caused and continues until the particles take the position which corresponds to the desired anisotropic properties.

Once this has happened, the viscosity of the material or precursor material is increased e.g. by cooling the material, or physical drying, or curing the material, or some other suitable modification. This is done in such a way that the position of the particles obtained under the influence of the radiation or field is "frozen," i.e. it remains in the absence of the radiation or field. During this viscosity-increasing step, exposure to the radiation or field may be continued or discontinued as necessary, provided that the particles remain in their desired position.

This orientation of the particles has the effect of providing the finished material with the desired anisotropic properties, which then can be detected, in the finished material, by exposing said material to suitable electromagnetic radiation or a suitable electric, magnetic, or electromagnetic field, which may or may not be the same radiation or field used in the course of the manufacturing step for orienting the particles.

In one broad category or aspect of the inventive method, the spatial movement or orientation of the particles is caused by a magnetic or electromagnetic field, and the anisotropic properties of the finished material are notable in that they give a threedimensionally-appearing optical effect, which is visible to the naked eye, then the finished material is illuminated with visible light. This type of anisotropic property is discussed in the initially-mentioned references. Where this is the case, the inventive method requires the material to comprise at least two identical or different, preformed substrates, typically in the form of sheaths or webs, which substrates are then connected by at least one intermediate layer. This is a typical structure of laminates and similar composite substrates.

Where this is the case, the inventive method requires the particles which cause or contribute to the anisotropic properties of the finished material, to be completely or partly comprised by the intermediate layer which connects at least two substrates.

In the other broad category or aspect of the inventive method, the force used to cause the spatial movement of the particles may be any electromagnetic radiation and/or electric, magnetic, or electromagnetic field, and the interaction of the material, to exhibit its anisotropic properties, may be with any electromagnetic radiation and/or electric, magnetic, or electromagnetic field, provided that, if a magnetic or electromagnetic field is used to spatially move the particles, the radiation or field which is used to exhibit the anisotropic properties of the finished material, is not visible light which, when the finished material is illuminated by it, interacts with the anisotropic properties of the finished material to produce a three-dimensionally-appearing optical effect visible to the naked eye, as in the above-recited references.

In this second aspect, it is possible that the radiation or field caused to spatially move may be the same radiation or field later used to interact with the anisotropic material.

In this second aspect of the invention, the radiation used to spatially move the particles may be an electric radiation or field. It may then be advantageous that the particles are provided with ionic or electric dipole charges, and the electric radiation or field comprises an inhomogeneous or homogeneous static electric field, or an alternating electric field.

In preferred embodiments of both aspects of the invention, the field used to spatially move the particles is the field of a permanent magnet or an electromagnet.

It has surprisingly been found that the spatial movement of the particles may cause varying thickness of a material layer comprising said particles - provided that the viscosity of said material layer is low enough. Thus, the inventive method may be used to vary the thickness of such a material layer. Preferably, this will be an outer layer in the finished material. This aspect of the inventive method may be used to deliberately create a surface profile of said layer, for example to create a tangible pattern. One example would be the formation of Braille letters.

The anisotropic properties of the material may be used to create a pattern which is not visible to the naked eye, but detectable by the use of suitable radiation or field (e.g. infrared or mass spectroscopy).

The component of the material to be provided with anisotropic properties, which comprises the said particles, may e.g. comprise magnetic or magnetizable pigment materials; pigment materials which are not magnetic or magnetizable, in a mixture with magnetic or magnetizable particles; pigment-coated magnetic or magnetizable materials; and a variety of other materials.

In preferred embodiments, the component comprises particles selected from metallic materials, metal oxide or silicon dioxide-coated metallic materials, ferromagnetic materials, ferrite materials, and materials formed by combining non-magnetic materials with magnetic or magnetizable materials.

The particles may be plate-like, needle-like, or even spherical. Metal powders such as iron powder, nickel powder, cobalt powder, powders derived from carbonyl iron, and/or silicon iron may be used. Pigments may include cobalt nickel spinels, iron oxides, and other materials disclosed in the above-referenced documents.

The component comprising the particles may be a separate component of the material or precursor material, or it may form said precursor material or material. Generally, it will include a carrier or binder for the particles, which in many preferred embodiments will be provided in sufficient quantity to embed the particles in a way that permits their individual spatial movement, as long as the binder or carrier material has a suitably low viscosity.

Typical carrier or binder systems comprise varnish systems and adhesive systems, including physically or chemically curing coatings such as aqueous or solvent-based thermoplastic or duroplastic materials. Alternatively, such systems may comprise solvent-free systems such as UV curing varnishes, powder coatings, liquid zero VOC systems (e.g. epoxy-amine or hydroxyl-isocyanate) and enamel coatings. In most embodiments, it is important that the viscosity of the material or precursor material (or in case just the viscosity of a component comprising the particles in such a material or precursor material) can be thermally modified or modified via the concentration of a solvent or diluent material, in such a way that a low viscosity can be provided which permits the spatial movement of the particles, whereas once the desired orientation of the particles is given, the viscosity may be increased to "freeze" the orientation of the particles, e.g. by cooling or by removing the solvent or diluent. Of course, in a curable material the uncured state may provide the necessary low viscosity for orienting the particles, and "freezing" the particles may then be effected by curing the material.

In many embodiments, the particles are comprised in a surface layer of the finished material, and said surface layer is produced by coating a top coating or surface coating material onto a suitable substrate. The particles may then be comprised by the material coated onto the substrate, or they may even be added later to such a coating material.

In that aspect of the invention which relates to laminates and similar materials, where the particles are comprised in an intermediate layer, the binder or carrier for the particles may be the laminating adhesive, especially at its low viscosity before the adhesive is cured or dried, to bond the substrates together, forming the final laminated material.

The electromagnetic radiation or electric, magnetic, or electromagnetic field used to spatially move the particles may be, for example, provided by a permanent magnet or an electromagnet.

The permanent magnet may be a rare earth magnet (e.g. neodymium/iron/boron), a ferrite magnet (e.g. strontium ferrite or barium ferrite) and, especially in the latter case, may take the form of a magnetic powder embedded in a polyethylene film, to form a flexible magnetic film. Such films are e.g. commercially available from Rheinmagnet under the trade name "Permaflex." Such films can be cut to form patterns or shapes. It is preferred to use axially magnetized films for forming letters or logos in the material. This permits fairly large three-dimensional effects to be created.

Suitable electromagnets may be DC or AC coils with iron cores. The end faces of the cores may be shaped, to create patterns in the material comprising the particles.

Arrays of several magnets can be used to create complex patterns; alternatively, a single magnet may be sufficient.

Such magnets may be used in direct contact with the substrate carrying the component comprising the particles; and in this case, it is preferable to contact the site of the substrate which does not carry the component.

Especially where magnetic films are used, such materials may be placed on rollers in a processing machine. Alternatively, magnets may be stationarily placed or may be movable to follow the path of movement of the material comprising the particles.

Where another type of radiation or field is used, the corresponding apparatus may be used in a similar fashion as described above with respect to magnets.

Substrates used in the inventive method, and for the inventive products, comprise metals (from very thin films up to sheet material), polymer films, paper, cardboard, glass, ceramic, wood, concrete, fabric (textile or non-woven), and a variety of other materials capable of carrying the component comprising the particles discussed above.

There are many uses for materials made in accordance with the invention. Basically, such uses comprise decorative uses as in the creation of aesthetics effects. Other uses are in advertising, in marking, anti counterfeiting and in the dissemination of content (instructions, directions, etc.).

Other uses are in the provision of technical effects, such as specific reflection or absorption of radiation.

Products made in accordance with the invention comprise packaging materials, such as stand-up pouches; bags, including film bags; containers, including drums, boxes, etc.

Other uses include decorated or inscribed panels, wall segments; traffic signs; advertising posters; covering fabrics, such as tarpaulins provided with advertising or instructions; surface coats, e.g. on vehicles, especially cars, and many more such applications.

### Embodiment Example I

A polyester pigment concentrate (Y1-H107 of ACTEGA Rhenania GmbH) containing approximately 40% of commercially available iron oxide yellow pigment (e.g. ***Bayferrox 3960*)** was applied to an aluminum sheet material with a dry film weight of approx. 25 g/m². The sheet was placed on an electromagnet, and the iron oxide particles were left to reorient in the field of the electromagnet, to form the desired pattern.

The solvent was then removed by blowing hot air on the coating; once the viscosity was high enough to "fixate" the pigment particles, the electromagnet was switched off, and the material was finished by heat curing at 260°C for 15 seconds.

### Embodiment Example 2

A solvent-based polyester/isocyanate laminating adhesive (LH066A of ACTEGA Rhenania GmbH) was provided with 10% of commercially available magnetizable *carbonyl iron powder (e.g. Art.44890 Fluka).* A LaboCombi machine was used to coat this laminating adhesive onto a 23 µm PET substrate film. The pigment was oriented by passing over a transport roller ultimately coated with a magnetic film (Permaflex PF928) in the drying channel. The substrate was then laminated against 60 µm PE film at 120°C.

### Embodiment Example 3

Using a solvent-based acrylic transfer varnish (Type D1297 of ACTEGA Rhenania), which is loaded with 20% cobalt-nickel-chrome-iron-spinel particles **(*Farbkörper R106 of ACTEGA Rhenania),*** on a transfer paper, a motif is initially created by passing the transfer paper over a corresponding magnetizing device, subsequently dried at room temperature for one day.

After removing the transfer paper, the transfer varnish is then temporarily fixed onto a ceramic substrate, and is burned at the typical temperature of 1050°C, which leads to the complete removal of the organic varnish and fixes the cobalt nickel spinel particles on the ceramic surface. The desired three-dimensional visual effect is preserved in this process.

## Claims

1. A method of manufacturing a material which shows anisotropic properties producing a threedimensionally-appearing optical effect, visible to the naked eye, upon illumination of the finished material with visible light, said material comprising a component which comprises particles, said component being capable of interacting with said visible light to effect, or contribute to, said anisotropic material properties, said particles being spatially moveable under the influence of a magnetic or electromagnetic field, said material further comprising at least two identical or different preformed substrates, which are connected by at least one intermediate layer, whereby the particles are completely or partially comprised by said intermediate layer, wherein
a) the material, or a suitable precursor material, is provided at a viscosity which permits the spatial movement of the particles;
b) the material or precursor material is exposed to the magnetic or electromagnetic field to cause a spatial movement of the particles until their position corresponds to the desired anisotropic properties, and
c) the viscosity of the material or precursor material is increased such that the position of the particles obtained in the preceding step remains in the absence of the radiation or field.

2. Method according to claim 1, wherein the field used to spatially move the particles is the field of a permanent magnet or an electromagnet.

3. Method according to claims 1 or 2, wherein the spatial movement of the particles is used to cause a varying thickness of a material layer comprising said particles, and wherein preferably a surface profile of said layer is created.

4. Method according to any preceding claim, wherein the component comprises particles selected from metallic materials, oxide-coated metallic materials; ferromagnetic materials; ferrite materials and materials formed by combining nonmagnetic materials with magnetic or magnetizable materials, and/or wherein the viscosity of the material or precursor material is modified thermally or via the concentration of a solvent or diluents, and/or wherein the spatial movement of the particles is effected by a permanently magnetic film, roller or plate, and/or wherein the spatial movement of the particles is effected by an electromagnetic device.

5. Method according to any preceding claim, wherein the particles are comprised in an intermediate layer of a laminated material, which further comprises a laminating adhesive, said adhesive bonding two sheet-like preformed substrates, and wherein preferably the spatial movement of the particles is effected while the viscosity of the adhesive, before, during or after the laminating step, is still lower, in comparison to its final value.

6. A laminated product obtainable or obtained by means of the method in accordance with any one of claim 1 through 5.

7. A laminated product comprising at least two substrates bonded by at least one intermediate layer, wherein the intermediate layer comprises particles as defined in any one of claim 1 through 5, which upon inspection with the naked eye shows a threedimensionally-appearing optical effect caused by the anisotropic spatial arrangement of said particles.

8. A laminated product according to any preceding claim, wherein at least one of the substrates is a polymer film or a paper or cardboard material, and/or wherein at least one of the substrates is a metal foil.

9. Packaging material or a container, comprising a material obtainable in accordance with any one of claims 1 to 5, especially in the form of a bag, a stand-up pouch, a film bag, or a box.

10. A stiff covering or building part, especially a panel or wall segment, comprising a material obtainable in accordance with any one of claims 1 to 5.

11. A flexible sheet-type element, comprising a material obtainable in accordance with any one of claims 1 to 5, especially in the form of a tarpaulin.

12. Use of the method in accordance with any one of claims 1 through 5, for the creation of a mark, a code, a pictogram, an inscription or any other readable pattern.

13. Use of the method in accordance with any one of claims 1 through 5, in a radiation or field shielding, reflection or transmission application.

## Patentansprüche

1. Verfahren zur Herstellung eines Materials, welches anisotrope Eigenschaften zeigt, die einen drei dimensional aussehenden optischen Effekt erzeugen, der für das bloße Auge sichtbar ist, wenn das fertige Material mit sichtbarem Licht bestrahlt wird, wobei das Material eine Komponente umfasst, welche Teilchen umfasst, wobei die Komponente in der Lage ist mit dem sichtbaren Licht wechselzuwirken um die anisotropen Materialeigenschaften zu bewirken oder dazu beizutragen, wobei die Teilchen unter dem Einfluss eines magnetischen oder elektromagnetischen Feldes räumlich beweglich sind, wobei das Material weiterhin mindestens zwei identische oder verschiedene vorgeformte Träger umfasst, welche durch mindestens eine Zwischenschicht verbunden sind, wobei die Teilchen vollständig oder teilweise in der Zwischenschicht enthalten sind, wobei
(a) das Material oder ein geeignetes Vorläufermaterial mit einer Viskosität bereitgestellt wird, welche die räumliche Bewegung der Teilchen erlaubt;
(b) das Material oder Vorläufermaterial einem magnetischen oder elektromagnetischen Feld ausgesetzt wird, um eine räumliche Bewegung der Teilchen zu bewirken bis deren Position den gewünschten anisotropen Eigenschaften entspricht, und
(c) die Viskosität des Materials oder Vorläufermaterials erhöht wird, so dass die im vorhergehenden Schritt erhaltene Position der Teilchen in Abwesenheit der Strahlung oder des Feldes beibehalten wird.

2. Verfahren gemäß Anspruch 1, wobei das Feld, das zum räumlichen Bewegen der Teilchen verwendet wird, das Feld eines Permanentmagneten oder eines Elektromagneten ist.

3. Verfahren gemäß Anspruch 1 oder 2, wobei die räumliche Bewegung der Teilchen verwendet wird um eine variierende Dicke einer die Teilchen umfassenden Materialschicht zu bewirken, und wobei vorzugsweise ein Oberflächenprofil der Schicht erzeugt wird.

4. Verfahren gemäß einem der vorstehenden Ansprüche, wobei die Komponente Teilchen umfasst, ausgewählt aus metallischen Materialien, oxidbeschichteten metallischen Materialien, ferromagnetischen Materialien, Ferrit-Materialien und Materialien, gebildet durch Kombinieren von nicht magnetischen Materialien mit magentischen oder magnetisierbaren Materialien, und/oder wobei die Viskosität des Materials oder Vorläufermaterials thermisch oder über die Konzentration eines Lösungsmittels oder Verdünnungsmittels modifiziert wird und/oder wobei die räumliche Bewegung der Teilchen durch einen permanent magnetischen Film, Rolle oder Platte bewirkt wird, und/oder wobei die räumliche Bewegung der Teilchen durch eine elektromagnetische Vorrichtung bewirkt wird.

5. Verfahren gemäß einem der vorstehenden Ansprüche, wobei die Teilchen in der Zwischenschicht eines laminierten Materials enthalten sind, welche weiterhin einen Laminierkleber umfasst, wobei der Kleber zwei bahnenartige vorgeformte Träger bindet, und wobei vorzugsweise die räumliche Bewegung der Teilchen bewirkt wird während die Viskosität des Klebers vor, während oder nach dem Laminierungsschritt nach wie vor niedriger ist im Vergleich zu dessen Endwert.

6. Laminiertes Produkt, erhältlich oder erhalten mittels des Verfahrens gemäß einem der Ansprüche 1 bis 5.

7. Laminiertes Produkt, umfassend mindestens zwei Substrate, die über mindestens eine Zwischenschicht gebunden sind, wobei die Zwischenschicht Teilchen, wie in einem der Ansprüche 1 bis 5 definiert, umfasst, welches bei Betrachtung mit bloßem Auge einen dreidimensional aussehenden optischen Effekt zeigt, welcher durch die anisotrope räumliche Anordnung der Teilchen bewirkt wird.

8. Laminiertes Produkt, gemäß einem der vorstehenden Ansprüche, wobei mindestens einer der Träger ein Polymerfilm oder ein Papier- oder Kartonmaterial ist, und/oder wobei mindestens einer der Träger eine Metallfolie ist.

9. Packmaterial oder Container, umfassend ein Material erhältlich gemäß einem der Ansprüche 1 bis 5, insbesondere in der Form einer Tüte, eines Standbeutels, eines Filmbeutels oder einer Schachtel.

10. Steife Abdeckung oder Bauteil, insbesondere ein Paneel oder Wandsegment, umfassend ein Material erhältlich gemäß einem der Ansprüche 1 bis 5.

11. Flexibles bahnenartiges Element, umfassend ein Material erhältlich gemäß einem der Ansprüche 1 bis 5, insbesondere in der Form einer Plane.

12. Verwendung des Verfahrens gemäß einem der Ansprüche 1 bis 5, zur Erzeugung einer Markierung, eines Codes, eines Piktogramms, einer Beschriftung oder irgendeines anderen lesbaren Musters.

13. Verwendung des Verfahrens gemäß einem der Ansprüche 1 bis 5, in einer Abschirmungs-, Reflexion- oder Transmissionsanwendung von Strahlung oder einem Feld.

## Revendications

1. Procédé de fabrication d'un matériau qui présente des propriétés anisotropes produisant un effet optique apparaissant de manière tridimensionnelle, visible à l'oeil nu, lors d'un éclairage du matériau fini à l'aide de lumière visible, ledit matériau comprenant un composant qui comprend des particules, ledit composant pouvant interagir avec ladite lumière visible pour réaliser lesdites propriétés de matériau anisotropes ou contribuer à celles-ci, lesdites particules étant spatialement mobiles sous l'influence d'un champ magnétique ou électromagnétique, ledit matériau comprenant en outre au moins deux substrats préformés identiques ou différents, qui sont reliés par au moins une couche intermédiaire, moyennant quoi les particules sont entièrement ou partiellement incluses dans ladite couche intermédiaire, dans lequel
a) le matériau, ou un matériau précurseur adapté, est fourni à une viscosité qui permet le mouvement spatial des particules,
b) le matériau ou le matériau précurseur est exposé au champ magnétique ou électromagnétique pour entraîner un mouvement spatial des particules jusqu'à ce que leur position corresponde aux propriétés anisotropes désirées, et
c) la viscosité du matériau ou du matériau précurseur est augmentée de telle sorte que la position des particules obtenues à l'étape précédente subsiste en l'absence du rayonnement ou du champ.

2. Procédé selon la revendication 1, dans lequel le champ utilisé pour mettre spatialement en mouvement les particules est le champ d'un aimant permanent ou d'un électro-aimant.

3. Procédé selon les revendications 1 ou 2, dans lequel le mouvement spatial des particules est utilisé pour entraîner une épaisseur variable d'une couche de matériau comprenant lesdites particules, et dans lequel un profil de surface de ladite couche est de préférence créé.

4. Procédé selon l'une quelconque des revendications précédentes, dans lequel le composant comprend des particules choisies parmi des matériaux métalliques, des matériaux métalliques revêtus d'oxyde, des matériaux ferromagnétiques, des matériaux de ferrite et des matériaux formés en combinant des matériaux non magnétiques avec des matériaux magnétiques ou magnétisables, et/ou dans lequel la viscosité du matériau ou du matériau précurseur est modifiée thermiquement ou via la concentration d'un solvant ou de diluants, et/ou dans lequel le mouvement spatial des particules est réalisé par un film, un rouleau ou une plaque magnétique de manière permanente, et/ou dans lequel le mouvement spatial des particules est réalisé par un dispositif électromagnétique.

5. Procédé selon l'une quelconque des revendications précédentes, dans lequel les particules sont incluses dans une couche intermédiaire d'un matériau stratifié, lequel comprend en outre un adhésif de stratification, ledit adhésif assemblant deux substrats préformés analogues à des feuilles, et dans lequel le mouvement spatial des particules est de préférence réalisé alors que la viscosité de l'adhésif, avant, pendant ou après l'étape de stratification, est encore inférieure, par rapport à sa valeur finale.

6. Produit stratifié pouvant être obtenu ou obtenu au moyen du procédé selon l'une quelconque des revendications 1 à 5.

7. Produit stratifié comprenant au moins deux substrats assemblés par au moins une couche intermédiaire, dans lequel la couche intermédiaire comprend des particules telles que définies dans l'une quelconque des revendications 1 à 5, qui, lors d'une inspection à l'oeil nu, présente un effet optique apparaissant de manière tridimensionnelle dû à l'agencement spatial anisotrope desdites particules.

8. Produit stratifié selon l'une quelconque des revendications précédentes, dans lequel au moins un des substrats est un film polymère ou un matériau de papier ou de carton, et/ou dans lequel au moins un des substrats est une feuille de métal.

9. Matériau d'emballage ou conteneur, comprenant un matériau pouvant être obtenu selon l'une quelconque des revendications 1 à 5, en particulier sous la forme d'un sac, d'un sachet à maintien vertical, d'un sac en pellicule ou d'une boîte.

10. Revêtement ou pièce de construction rigide, en particulier un panneau ou un segment de paroi, comprenant un matériau pouvant être obtenu selon l'une quelconque des revendications 1 à 5.

11. Elément de type feuille souple, comprenant un matériau pouvant être obtenu selon l'une quelconque des revendications 1 à 5, en particulier sous la forme d'une bâche.

12. Utilisation du procédé selon l'une quelconque des revendications 1 à 5, pour la création d'une marque, d'un code, d'un pictogramme, d'une inscription ou de tout autre motif lisible.

13. Utilisation du procédé selon l'une quelconque des revendications 1 à 5, dans une application de protection contre, ou de réflexion ou de transmission d'un rayonnement ou d'un champ.
